# EUROPEAN PATENT SPECIFICATION

(11) **EP 4 453 781 B1**
(45) Date of publication and mention of the grant of the patent: **09.09.2026**
(21) Application number: 22822537.1
(22) Date of filing: 29.11.2022
(51) Int. Cl.: G06K 7/14

(54) **METHOD, APPARATUS AND SYSTEM RELATED TO EXTRACTING DATA REPRESENTED BY AN OPTICAL PATTERN**
VERFAHREN, VORRICHTUNG UND SYSTEM ZUR EXTRAKTION VON DURCH EIN OPTISCHES MUSTER REPRÄSENTIERTEN DATEN
PROCÉDÉ, APPAREIL ET SYSTÈME LIÉS À L'EXTRACTION DE DONNÉES REPRÉSENTÉES PAR UN MOTIF OPTIQUE

(30) Priority: 20.12.2021 US 202163291506 P
(43) Date of publication of application: 30.10.2024
(73) Proprietor: Henkel AG & Co. KGaA, 40589 Düsseldorf (DE)
(72) Inventor: TALKEN, Nick, Concord, California 94520 (US); KISNER, Zack, Concord, California 94520 (US)
(86) International application number: PCT/EP2022/083636
(87) International publication number: WO 2023/117330

(56) References cited:
- WO-A1-2009/156603
- US-A1- 2020 394 452
- US-B2- 10 176 452

## Description

### FIELD OF THE DISCLOSURE

Various embodiments disclosed herein relate to a method, an apparatus or a system related to extracting data represented by an optical pattern.

### BACKGROUND

Optical patterns, e.g. barcodes or quick response (QR) codes, may represent data. Therefore, they may be used in various scenarios. For example, printed barcodes may be attached to devices. A scanner, also referred to as reader, may then be used to scan and extract the data represented by an optical pattern, e.g. information identifying a device.

US 10176452 B2 describes a store profile generation system includes a mobile base and an image capture assembly mounted on the base. The assembly includes at least one image capture device for acquiring images of product display units in a retail environment.

WO 2009156603 A1 describes a method for identifying a document printing plate involves: printing a document with the plate; capturing a high-resolution image of part of the document; extracting and storing a geometric feature from this image; capturing a high-resolution image of the same part of a candidate document; extracting the geometric feature of this candidate image; and determining if the correlation measurement between the candidate and stored features exceeds a set threshold.

### SUMMARY

Under various circumstances, it may be desirable to reliably extract information from optical patterns.

However, optical patterns may be small, may have been printed in a bad quality, may be damaged and/or may be scuffed. Due to these example reasons, it may happen in some scenarios that information cannot be reliably extracted from optical patterns.

Improving the reliability of scanners of optical patterns may not be straightforward under various circumstances. For example, adding processing steps to the scanning and data extraction process for increasing the reliability may be computationally expensive and/or may involve using additional memory. Under various circumstances, it may be a consequence of this that various types of devices cannot or cannot adequately perform the scanning and data extracting process involving the additional processing steps.

It is inter alia an objective of various embodiments described herein to overcome one or more of the disadvantages stated above and/or improve and/or adapt one or more of the technologies described above.

According to an example aspect, a method is disclosed, as defined in appended claim 1.

Any disclosure herein relating to the example aspect is to be understood to be equally disclosed with respect to any subject-matter according to the example aspect, e.g. relating to an apparatus, a method, a computer program, and a computer-readable medium. Thus, for instance, the disclosure of a method step shall also be considered as a disclosure of means for performing and/or configured to perform the respective method step. Likewise, the disclosure of means for performing and/or configured to perform a method step shall also be considered as a disclosure of the method step itself. The same holds for any passage describing at least one processor; and at least one memory including computer program code; the at least one memory and the computer program code configured to, with the at least one processor, cause an apparatus at least to perform a step.

In the following, example details and example embodiments of the various example aspects introduced above will be described.

In various embodiments, the following step may be performed:
- detecting one or more resolutions useable for capturing one or more frames with a camera of an apparatus.

The step, e.g. like any other steps described herein, may be performed by one or more apparatuses. The one or more apparatuses may correspond to or comprise the apparatus for whose camera the one or more resolutions useable for capturing the one or more frames are detected. However, this is not necessarily the case and the one or more apparatuses performing the method may be e.g. servers and communicate with another apparatus having a camera. In various embodiments, the method may be performed in or by an application, e.g. a smartphone application.

An apparatus, e.g. the apparatus having the camera, may for example be a mobile device, e.g. a smartphone, a tablet, a reader (e.g. a barcode and/or QR-code reader), or a digicam. It may comprise one or more cameras. For example, it may comprise a camera for the front and back, respectively. If the apparatus comprises a plurality of cameras, the detecting of the one or more resolutions useable for capturing the one or more frames may relate to a specific camera of the plurality of cameras of the apparatus in various embodiments. In other embodiments where the apparatus comprises a plurality of cameras, the detecting of the one or more resolutions useable for capturing the one or more frames may relate to some or all cameras of the plurality of cameras of the apparatus.

The detecting of the one or more resolutions useable for capturing one or more frames may correspond to detecting one or more resolutions useable for capturing a video (comprising one or more frames) and/or for capturing one or more photos (corresponding to or comprising the one or more frames). In various embodiments, the one or more resolutions useable for capturing a video may be (partly) different than the one or more resolutions useable for capturing one or more photos. However, in other embodiments, the same one or more resolutions are useable for capturing a video or one or more photos.

The detecting may be performed e.g. by requesting information, e.g. from a software interface, e.g. a driver, for instance of the camera, and/or an application programming interface (API). The API could e.g. be part of, provided by or be interworking with an operating system.

One or more resolutions being useable for capturing one or more frames may be understood to refer to the possibility to use one or more resolutions in a specific situation. By way of example, this may mean that e.g. electronic access rights, e.g. for an application in which the detecting is carried out, and other constraints such as a battery status may be considered. However, one or more resolutions being useable for capturing one or more frames may additionally or alternatively be understood to refer to e.g. hardware and/or processing capabilities, e.g. of the apparatus, a chip, or the camera, for instance regardless of a specific situation.

A resolution may be represented in various manners, as can be seen from the following examples.

In various embodiments, the term "resolution" may be understood to refer to image resolution . Image resolution may be measured in various ways. Resolution may be understood to quantify how close lines can be to each other and still be visibly resolved. Resolution units may be tied to physical sizes (e.g. lines per mm, lines per inch), to pixels (e.g. cycles per pixel), or to the overall size of a picture (lines per picture height, also known simply as lines, TV lines, or TVL). Line pairs may be used instead of lines, where a line pair may comprise a dark line and an adjacent light line.

In various embodiments, the term "resolution" may be understood to refer to a pixel resolution which may e.g. be represented with a set of two positive integer numbers, where e.g. the first number is the number of pixel columns (width) and the second is the number of pixel rows (height), for example as 640x480. A resolution may also be understood to be represented by a total number of pixels in an image, e.g. in megapixels. The term "resolution" may also be understood to refer to a number of pixels per length unit or pixels per area unit, such as pixels per inch or per square inch. In various embodiments, resolution may be understood to refer to spatial resolution, e.g. the number of independent pixel values per unit length (or per area unit).

In various embodiments, the following step may be performed:
- setting a detected resolution for capturing one or more frames relating to an optical pattern using the camera of the apparatus, the set resolution being greater than one or more further resolutions useable for capturing one or more frames with the camera of the apparatus.

Thus, a resolution of the one or more resolutions detected in the previous step may be set. In case only one resolution useable for capturing one or more frames with the camera of the apparatus was detected, this one resolution may be set. In case a plurality of resolutions useable for capturing one or more frames with the camera of the apparatus was detected, a resolution may be set that is greater than one or more further resolutions useable for capturing one or more frames with the camera of the apparatus.

In various embodiments, a detected resolution from the one or more detected resolutions is selected based on one or more criteria for setting such that the set resolution is greater than one or more further resolutions useable for capturing one or more frames with the camera of the apparatus. For example, the set resolution may be the maximum of the one or more detected resolutions. In another example, the set resolution may be a minimum resolution from the one or more detected resolutions that is still equal to or greater than a predetermined threshold. In a further example, there may be a predetermined list of resolutions to be used, e.g. a priority list. The set resolution may then be selected according to the list, e.g. a detected resolution may be set that has e.g. a higher (or e.g. lower) position in the list than one or more or all other detected resolutions. Other selection schemes are possible.

In various embodiments, detecting the one or more resolutions useable for capturing one or more frames with a camera of an apparatus and setting a detected resolution may be beneficial in that it allows to dynamically adapt to a specific apparatus and/or situation.

In various embodiments, the following step may be performed:
- capturing one or more frames relating to an optical pattern using the camera of the apparatus and using the set resolution.

The capturing of the one or more frames using the camera of the apparatus and using the set resolution may correspond to taking a video and/or taking one or more photos. The one or more frames may be, e.g. temporarily, stored. For instance, they may be stored as raw data and/or as compressed data according to an image or video compression standard. An example of an image compression standard is JPEG. Examples for video compression standards are H.264 or H.265.

The one or more frames being captured may for example relate to an optical pattern in that at least one of them represents at least part of the optical pattern and/or in that at least one of them is processed to detect whether it represents at least part of the optical pattern. By way of example, an apparatus may capture the one or more frames using the camera while the camera is moved, e.g. by a user that wants to scan an optical pattern. Due to the movement, it may happen that only one frame (or only some frames) represent the optical pattern (fully or partly), while others do not represent the optical pattern. During the capturing, the apparatus may or may not be aware of whether one or more frames represent the optical pattern (fully or partly).

In various embodiments, the following step may be performed:
- processing the one or more captured frames for extracting data represented by the optical pattern.

The processing may comprise detecting whether one or more of the one or more captured frames comprises a representation of an optical pattern (or, possibly, a plurality of optical patterns) or at least part of it. In various embodiments, the processing may comprise determining a type of an optical pattern that was detected in one or more of the one or more captured frames. In various embodiments, the processing may comprise various image and/or signal processing steps, e.g. to detect corners or edges of the optical pattern, for instance to determine which part of a frame represents an optical pattern. The data may be extracted by converting elements of an optical pattern to bits. Further processing steps may then be taken, e.g. error-correcting codes may be applied. The processing may be carried out in software, e.g. running on a general purpose processor, in hardware, or in a combination of software and hardware.

In various embodiments, the optical pattern to which the one or more captured frames relate may be or comprise a barcode and/or a quick response, QR, code.

A barcode may be a one dimensional barcode. It may comprise a plurality of bars that may have e.g. different shapes, e.g. different widths. The bars may be essentially parallel. However, a barcode may also represent data in two dimensional form, e.g. using rectangles, dots, hexagons or other patterns. Thus, a barcode may, despite its historical name, lack actual "bars".

A QR code may be considered to be a special type of two dimensional barcode. It may be considered to be having three squares at three corners, respectively, and having one square that is smaller than the other three squares, e.g. in terms of area and/or one or two dimensions, in a quadrant of the fourth corner. Data may be extracted from a QR code by locating the three squares at the corners of the QR code image, using the smaller square (or multiple squares) near the fourth corner to normalize the image for size, orientation, and angle of viewing. The small dots throughout the QR code may then be converted to binary numbers and validated with an error-correcting algorithm.

In various embodiments, the optical pattern to which the one or more captured frames relate has a size that is less than or equal to a predetermined threshold size, e.g. in terms of area and/or one or more dimensions. For example, the optical pattern to which the one or more captured frames relate may be equal to or smaller than 1000 mm², 500 mm², 400 mm², 300 mm², 200 mm², 100 mm², 50 mm², 40 mm², 30 mm², 20 mm², 10 mm², 5 mm², 1 mm² or any value greater than, smaller than or in between the listed values. Additionally or alternatively, the optical pattern to which the one or more captured frames relate may be in at least one dimension equal to or smaller than 100 mm, 50 mm, 40 mm, 30 mm, 20 mm, 10 mm, 5 mm, 4 mm, 3 mm, 2 mm, 1 mm, 0.5 mm, 0.1 mm. Having an optical pattern to which the one or more captured frames relate that has a size that is less than or equal to a predetermined threshold size may enable a flexible use of the optical pattern. For instance, like this, the optical pattern may be attached to various objects, e.g. in a laboratory environment. These objects may be small, e.g. a test tube.

In various embodiments, the optical pattern to which the one or more captured frames relate is printed on a physical object in a print quality less than or equal to a predetermined threshold. The print quality may for instance be measured in dots per inch (DPI) and/or dots per centimeter. The predetermined threshold may for example be one of: 10, 20, 30, 40, 50, 60, 70, 72, 96, 150 (in dpi, respectively).

Further, in various embodiments, the physical object may be a label or tag. The label or tag may be attached to another object, like a laboratory device or e.g. a test tube. Alternatively, the physical object may be another type of object, e.g. a cylindrical object like a tube or a bottle. The optical pattern may be directly printed onto the object.

In various embodiments, the one or more captured frames are processed using a predetermined default video or image encoder. For example, the one or more captured frames may be processed using a H.264 or H.265 video encoder and/or decoder. Alternatively, the one or more captured frames may be processed using an image encoder like JPEG or PNG. The one or more captured frames may for example be temporarily stored and/or transferred, e.g. between components of a device, in an encoded format. Using an encoder and/or an encoded format, e.g. for compressing the raw data of the one or more captured frames, may decrease the amount of data that needs to be (temporarily) stored or transferred. Moreover, using a predetermined default video or image encoder may be beneficial in that predefined characteristics of the encoding standard may be exploited. For example, video encoders may use motion vectors when encoding the one or more captured frame. This might be used in the processing. For example, motion vectors determined in the encoding and/or present in the encoded bitstream may be
used for tracking an optical pattern across the one or more captured frames.

A condition for using the predetermined default video or image encoder may be that the predetermined default video or image encoder is useable on the apparatus for processing the one or more captured frames. A condition for being useable may be that it is available, e.g. installed. Accordingly, an apparatus might check whether the predetermined default video or image encoder is available and/or useable on the apparatus for processing the one or more captured frames. If that is not the case, another video or image encoder might be used and the processing may be adapted accordingly. Alternatively, the predetermined default video or image encoder may be installed if it is not found to be available in the check. In various embodiments, a user may be notified that a specific default video or image encoder, e.g. the predetermined default video or image encoder, should be installed. The user may then be able to react to this and trigger the installation process, e.g. by a user input.

In various embodiments, a plurality of frames, e.g. comprised in a video, are captured in the capturing of the one or more frames. For example, the capturing of the one or more frames may start. It may then continue, for instance until a predetermined number of frames has been captured. Alternatively, it may continue until a predetermined time or duration has passed. Additionally or alternatively, the capturing may continue until an optical pattern has been detected. Additionally or alternatively, the capturing may continue until the capturing is terminated, e.g. by a predefined type of user input. The terminating conditions mentioned above may be combined. For example, one or more of the terminating conditions may be active and as soon as the first condition is met, the capturing stops.

In various embodiments, the plurality of frames are captured using a predetermined default framerate. The framerate may e.g. define how many frames are captured per second. Examples may be 5, 10, 15, 20, 25, 30, 50, 60, or 90 frames per second (fps) or anything in between or below or above that.

The capturing may be done at time instants that are equally-spaced apart. For example, if the predetermined default framerate equals 30 fps, a frame may be captured every 1/30 s which approximately corresponds to every 0.0333 s. Alternatively, the capturing may be done at time instants that are variably spaced apart. For example, once an apparatus detects an optical pattern, it may decrease the time interval before capturing a next frame.

A condition for using the predetermined default framerate may be that the predetermined default framerate is useable on the apparatus for capturing the one or more captured frames with the camera of the apparatus. A condition for being useable may be that it is supported, e.g. by the camera and/or other hardware components. Accordingly, an apparatus might check whether the predetermined default framerate is available and/or useable on the apparatus for processing the one or more captured frames. If that is not the case, another, e.g. lower, framerate might be used and the processing may be adapted accordingly.

By way of example, the predetermined default framerate may be selected regardless of whether a specific apparatus might support a higher framerate for capturing frames. This may be beneficial in terms of processing load and/or requirement of memory resources.

In various embodiments, the processing of the one or more captured frames for extracting data related to the optical pattern may comprise:
- selecting a frame from the plurality of frames, the selected frame comprising a representation of at least part of the optical pattern; and
- extracting the data based on the representation of the at least part of the optical pattern.

The selecting of the frame from the plurality of frames may be based on a detection whether at least part of an optical pattern is present in the frame. The detecting may be based on image processing techniques, e.g. corner and/or edge detection, e.g. based on two-dimensional filtering and subsequent comparison to a threshold.

The selecting may entail that the extracting of the data is done based on the selected frame, but for example not on frames that were not selected. Further, the selecting may involve that frames that were captured before and/or after the selected frame was captured are e.g. not or no longer analyzed to detect whether they comprise a representation of at least part of the optical pattern.

Selecting a frame may trigger that the capturing of the frames stops. Thus, the selecting may be done in real-time or almost real-time, e.g. within milliseconds or seconds after the frame that is selected was captured.

The extracting of the data based on the representation of the at least part of the optical pattern may differ depending on the type of optical pattern, e.g. whether it is a barcode, e.g. a one-dimensional barcode, or e.g. a QR-code. One step may for instance involve converting the selected frame to grayscale. However, this step may alternatively be done for the one or more captured frames before selection of one frame. Another step that may be done is localization of an optical pattern. For example, for a one-dimensional barcode, this may involve the computation of directional coherence. Again, also this step may be done before or after the selecting. Another possible step may involve the use of a binarization method to binarize a frame or part thereof. Having a binarized frame or part thereof may mean that some or all pixels of the frame or part have one out of two values, respectively, e.g. 0 or 1. Examples for binarization methods are Otsu's method and/or ZXing's Hybrid binarization. A further step may involve the decoding of the optical pattern, e.g. according to the predefined structure of the type of optical pattern.

For example, if the optical pattern is a one-dimensional barcode under EAN13, the EAN13 structure may be used for decoding. An EAN13 barcode may consist of 95 areas (bars) of, e.g. essentially, equal width, each of which is white or black. White may stand for a 0-bit and black for a 1-bit. The long bars at the beginning and at the end may consist of 3 bars each (bits: 101), the long bar in the middle of 5 bars (bits: 01010). The number bars (6 each on the left and right) may consist of 7 bits each. More specifically, each digit may be represented by seven bits in such a way that two lines and two spaces each represent a digit. In total, an EAN13 barcode thus may have 95 areas / bars, which can be white or black. Based on this structure, the digits may be determined, e.g. using a look-up table for each group of seven bits. By way of example, the extracted data may then be understood to correspond to the digits represented by the barcode. However, it is to be understood that the EAN13 structure is merely an example and that other decoding processes may be used for the EAN13 structure and/or for other optical pattern types.

In various embodiments, the processing of the one or more captured frames comprises cropping at least one frame of the one or more captured frames. The at least one frame may be the selected frame. In various embodiments, the cropping may be part of the extracting of the data. In other embodiments, the cropping may happen even before the extracting and/or before the selecting of the frame.

In various embodiments, the at least one frame that is cropped may be cropped according to a predetermined default ratio with respect to the set resolution. Alternatively or additionally, the at least one frame that is cropped may be cropped based on a detection of a representation of at least part of an optical pattern in the at least one frame. Thus, the cropping may involve removing parts of the at least one frame that do not comprise the at least part of the optical pattern and keeping parts of the at least one frame that comprise the at least part of the optical pattern.

The cropping may reduce the amount of data that is processed in the subsequent steps. Accordingly, the processing may require less computation and/or memory resources as compared to the case that the at least one frame would not be cropped.

In various embodiments, the method according to the example aspect further comprises the following:
- detecting an amount of memory useable for storing one or more frames during the processing, e.g. for extracting data; and
wherein the detected resolution for capturing the one or more frames relating to the optical pattern using the camera of the apparatus is set taking into account the detected amount of memory.

The detection of the amount of memory useable for storing one or more frames during the processing may involve determining how much memory is currently available, e.g. for a specific application. That may be for instance the application that triggered the detection. The information indicating the amount of memory may for instance be retrieved in response to a request to the operating system, e.g. via an API. Additionally or alternatively, the amount of memory useable for storing one or more frames during the processing may be detected indirectly, e.g. by retrieving information about the total amount of useable memory and the amount of memory that is already allocated, e.g. by other apps. The amount of memory useable for storing one or more frames during the processing may then be calculated.

The amount of memory useable for storing one or more frames during the processing may refer to a particular type of memory. For instance, it may refer to the main memory of the device, e.g. a random-access memory (RAM). Thus, it may ignore any further memory that might possibly be useable for storing one or more frames during the processing, e.g. secure digital (SD) cards or the like or any other internal memory. This may be beneficial in that some types of memory, e.g. RAM, may allow quicker access than other types of memory, e.g. some sorts of SD cards. However, in other embodiments, the total available memory may be considered, regardless of the type.

Once an amount of memory useable for storing one or more frames during the processing has been detected, it may be taken into account in setting a detected resolution for capturing the one or more frames relating to the optical pattern using the camera of the apparatus. For example, it may be estimated how much memory will be used when capturing and processing the one or more frames using the camera of the apparatus using a first resolution. Then it can be determined whether the amount of memory useable for storing the one or more frames during the processing is greater or less than the estimated amount of memory. Further offsets and/or processing steps may be taken to obtain the outcome of the determining. Depending on the outcome of the determining, it may be decided to set the first resolution for capturing the one or more frames or to determine whether the outcome of the determining changes for another resolution. For this other resolution, the process described above may be repeated.

The procedure described above may be beneficial in that it may increase the efficiency of the processing and/or prevent malfunctioning and/or a slow-down of the processing due to a lack of memory. Further, the procedure described above may work synergistically with various other features, in particular with using a predetermined default video or image encoder and/or using a predetermined default framerate, as using predetermined default setting simplifies the estimation of the amount of memory which will be used when capturing and processing the one or more frames using the camera of the apparatus.

In various embodiments, the following may be performed:
- printing the optical pattern on a physical object such that one or more frames relating to the optical pattern are capturable.

This step may be performed by an apparatus being or comprising a printer. The apparatus may be identical or different from the apparatus whose camera may be used for capturing the one or more frames.

The physical object may for example be a label or tag. Accordingly, the apparatus performing the step may be a label printer/label maker. However, the physical object may also be another object, e.g. a test tube or a measurement device, and the printing may be performed directly onto the object, e.g. the test tube or the measurement device.

The printing may be done in a print quality less than or equal to a predetermined threshold, e.g. measured in dots per inch (DPI). The examples and explanations with regard to print qualities given above also apply here.

Under various circumstances, printing in a low print quality could be considered to be a disadvantage. However, in context of the method according to the example aspect described above, printing in a print quality that is less than or equal to a predetermined threshold may be advantageous. More specifically, the printing may be less complex when the printing is done in a print quality less than or equal to a predetermined threshold. As the resolution used for capturing one or more frames relating to an optical pattern may be increased within the limits of a device's capabilities, the reliability of the data extraction may still be acceptable despite the "low" print quality.

As described above, many different factors might have an effect on the reliability of extracting data from an optical pattern, such as for instance the framerate for taking the video, how frames and/or the video are encoded and how the processing of the frames is done, e.g. in terms of cropping the frames. At the same time, the capturing and processing of the one or more frames may be computationally expensive and may require large amounts of memory. Thus, simply "improving" all factors to attempt to increase the reliability of extracting data, e.g. increasing framerate, making more complex processing steps, etc., may not be effective as it might exhaust the capabilities of scanning devices and thus lead to failures.

In contrast, it was observed that detecting one or more resolutions useable for capturing one or more frames with a camera of an apparatus; setting a detected resolution for capturing one or more frames relating to an optical pattern using the camera of the apparatus, the set resolution being greater than one or more further resolutions useable for capturing one or more frames with the camera of the apparatus; capturing one or more frames relating to an optical pattern using the camera of the apparatus and using the set resolution; and processing the one or more captured frames for extracting data represented by the optical pattern may significantly increase the reliability of a scanner. In particular, this may even be the case when some or all other factors that may play a role, e.g. framerate and/or used image or video encoder, may be kept at a predetermined default value (that may be less than the capability of many devices) to enable that the capturing and processing does not become too expensive in terms of computation and memory costs. This effect was not observed or at least not to the same extent when reversing the roles, e.g. setting a detected framerate that is greater than one or more further framerates useable for capturing frames with the camera of the apparatus while using a predetermined default resolution.

In particular considering that optical patterns may be printed in a low quality and/or be of limited size, many objects might be equipped with respective optical patterns. In various embodiments, the method according to the example aspect described above may be used in a system, the system comprising a plurality of objects, each of the plurality of objects comprising a respective optical pattern representing respective data. The objects may for instance be part of lab equipment, e.g. test tubes or measurement devices. An optical pattern may identify an object or e.g. its content, e.g. by an identifier, e.g. a number

As described above, the optical patterns may be printed. Accordingly, a system is disclosed, the system comprising a first apparatus configured to print an optical pattern representing data on a physical object and comprising a second apparatus that is configured to perform at least the following: detecting one or more resolutions useable for capturing one or more frames with a camera of the second apparatus; setting a detected resolution for capturing one or more frames relating to an optical pattern using the camera of the second apparatus, the set resolution being greater than one or more further resolutions useable for capturing one or more frames with the camera of the second apparatus; capturing one or more frames relating to the printed optical pattern using the camera of the second apparatus and using the set resolution; and processing the one or more captured frames for extracting the data represented by the printed optical pattern.

In the following, example embodiments will be described with reference to drawings.

### BRIEF DESCRIPTION OF THE DRAWINGS

It is shown in:
- Fig. 1: a schematic diagram of a system according to an example embodiment;
- Fig. 2: a flowchart illustrating a method according to an example embodiment;
- Fig. 3: a schematic diagram illustrating processing steps of an example embodiment;
- Fig. 4: a schematic block diagram of an apparatus for performing one or more steps of a method according to an example embodiment; and
- Fig. 5: a schematic block diagram of another apparatus for performing one or more steps of a method according to an example embodiment, the apparatus comprising a printer.

### DETAILED DESCRIPTION OF EXAMPLE EMBODIMENTS OF THE INVENTION

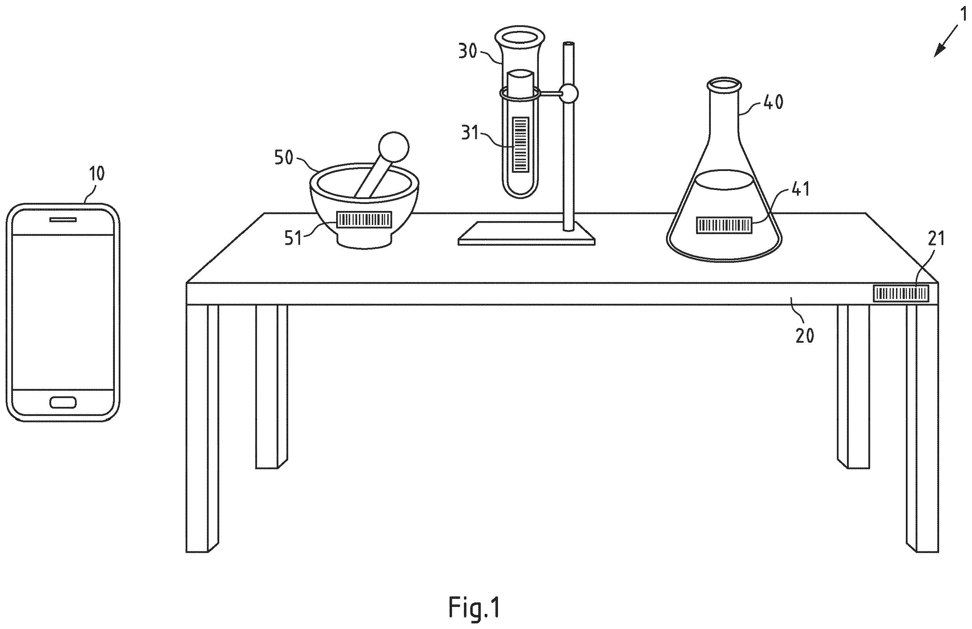

Fig. 1 shows a schematic diagram of a system 1 according to an example embodiment.

By way of example, system 1 may comprise a laboratory bench 20. The laboratory bench 20 may be equipped with an optical pattern 21. As an example, optical pattern 21 may be a one-dimensional barcode. It may have been printed on a tag, e.g. by a label maker, and attached to the laboratory bench 20. The one-dimensional barcode may represent an identifier that uniquely identifies the laboratory bench 20 among other objects, e.g. in a laboratory.

Examples of such further objects are a test tube 30, an Erlenmeyer flask 40 and mortar and pestle 50. Although not represented in the figures, further objects may also be containers of chemical formulations of all kinds. By way of example, each of these objects is equipped with an optical pattern 31, 41, 51, respectively. The optical patterns 31, 41, 51 may be one-dimensional barcodes. Moreover, they may represent identifiers that uniquely identify the respective objects 30, 40, 50, e.g. in the laboratory.

System 1 may comprise an apparatus 10. By way of example, apparatus 10 may be a smartphone. Apparatus 10 may be an apparatus whose camera is used for capturing one or more frames relating to an optical pattern 21, 31, 41, 51.

More specifically, apparatus 10 may be equipped with a functionality for scanning optical patterns 21, 31, 41, 51. The functionality may be provided by an application that is running on the apparatus 10. The application may be based on LBXScanner software. In particular, it may comprise a modified version of the LBXScanner software. The application may for instance be started by a user, e.g. by a user input. The user could, for example, be looking for a particular test tube and, thus, be wanting to check whether test tube 30 is the test tube they are looking for. To that end, the user might want to scan the optical pattern 31 of the test tube 30 and compare the represented identifier with other identifiers, for example identifiers that are stored in a database.

The application may, e.g. after it has been started by the user, detect one or more resolutions that are useable for capturing one or more frames with a camera of the apparatus 10, e.g. a back camera. It may then set a detected resolution for capturing one or more frames relating to the optical pattern 31 using the back camera of the apparatus 10, the set resolution being greater than one or more further resolutions useable for capturing one or more frames with the back camera of the apparatus 10. By way of example, in this example embodiment, it may set the maximum of the detected resolutions for capturing the one or more frames. This may be beneficial considering that the optical pattern 31 may be small, e.g. less than 100 mm² (Fig. 1 not drawn to scale), and/or has been printed in a print quality that is less than or equal to a predetermined threshold and/or that the camera is placed further apart from the frame than would be recommended.

Next, the apparatus 10 may capture one or more frames relating to the optical pattern 31 using the camera of the apparatus 10 and using the set resolution. By way of example, the apparatus 10 may capture a video which comprises the one or more frames using a predetermined default framerate. The predetermined default framerate may be less than the maximum framerate supported by the apparatus 10. Using the predetermined default framerate may reduce the amount of resources for processing and/or storing that need to be used and/or will be used in and/or after the capturing of the one or more frames.

Subsequently, the application processes the one or more captured frames for extracting data represented by the optical pattern 31. By way of example, the application may use a predetermined default video encoder in the processing.

As described above, in this example embodiment, the data represented by the optical pattern 31 may be an identifier. Once the identifier has been extracted, it may for example be shown on the screen of apparatus 10. Additionally or alternatively, it may be transmitted e.g. to a server where the identifier is stored in a database, e.g. if it is a new identifier, and/or where a database is searched based on the identifier for further information. If there is information that is stored in the database associated with this identifier, it may be provided to the apparatus 10 for displaying it, e.g. to a user.

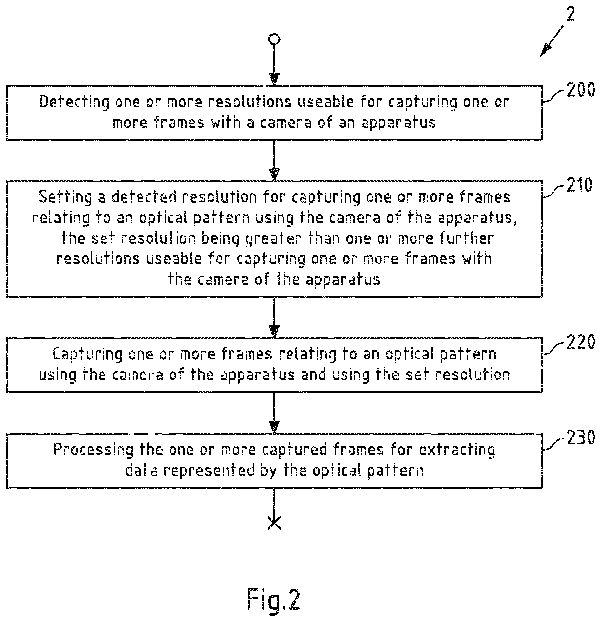

Fig. 2 shows a flowchart illustrating a method 2 according to an example embodiment. It may be performed by an apparatus, e.g. apparatus 10 of system 1.

Step 200 comprises detecting one or more resolutions useable for capturing one or more frames with a camera of an apparatus. This step may for example be triggered by a user, e.g. by starting an application and/or pressing a button.

As an example, the following three resolutions useable for capturing one or more frames with a camera of an apparatus could be detected: 640x480 pixels, 1920x1280 pixels, 3840×2160 pixels.

The apparatus performing method 2 may be configured to use a predetermined default framerate of 24 fps for the method 2. To this end, it may be checked whether the apparatus performing method 2 indeed supports this predetermined default framerate of 24 fps.

Even though the apparatus may support other framerates as well, e.g. 30 fps, 60 fps, and 120 fps, it is not necessary that the apparatus detects these other supported framerates (regardless, it may do so). Using a predetermined default framerate, in particular one that is not the maximum supported by a specific apparatus, may be beneficial in that it may keep the load on the memory and the processor on a level that is acceptable for various types of devices.

Step 210 comprises setting a detected resolution for capturing one or more frames relating to an optical pattern using the camera of the apparatus, the set resolution being greater than one or more further resolutions useable for capturing one or more frames with the camera of the apparatus. Execution of this step may be triggered by completion of step 200. Additionally or alternatively, completion of at least parts of step 200 may be a condition (possibly one of a plurality of conditions) for carrying out step 210.

As an example, the maximum of the detected resolutions may be set in step 210, e.g. 3840x2160 pixels. This may increase the reliability of extracting data represented by an optical pattern as compared to using a lower resolution, e.g. 640x480 pixels.

However, in various embodiments, an amount of memory useable for storing one or more frames during the processing of step 230 could be detected, e.g. before step 210 is performed. Then, the detected resolution for capturing the one or more frames relating to the optical pattern using the camera of the apparatus may be set taking into account the detected amount of memory. For example, it may be detected that the amount of memory useable for storing one or more frames during the processing of step 230 would be sufficient for only a limited number, e.g. 5, frames of resolution 3840x2160 pixels. This observation may be taken into account when setting a detected resolution for capturing one or more frames relating to an optical pattern using the camera of the apparatus. More specifically, instead of setting the maximum of the detected resolutions in step 210, e.g. 3840x2160 pixels, a lower resolution could be set, e.g. 1920x1280 pixels. This may be beneficial in that it may increase the reliability of extracting data represented by an optical pattern as compared to using a lower resolution, e.g. 640x480 pixels, while not exhausting memory limits.

Step 220 comprises capturing one or more frames relating to an optical pattern using the camera of the apparatus and using the set resolution. This step may be triggered by a user input and/or by completion of (at least part of) step 210. One or more further conditions may need to be fulfilled.

Step 220 may involve taking a video comprising the one or more frames. A user may for example hold the apparatus capturing the one or more frames with the camera directed to an optical pattern, e.g. a barcode.

As an example, the frames may be captured in a resolution of e.g. 3840x2160 pixels, e.g. in case the maximum of the detected resolutions was set before, or e.g. in a resolution of e.g. 1920x1280 pixels, if this is the resolution that was set before.

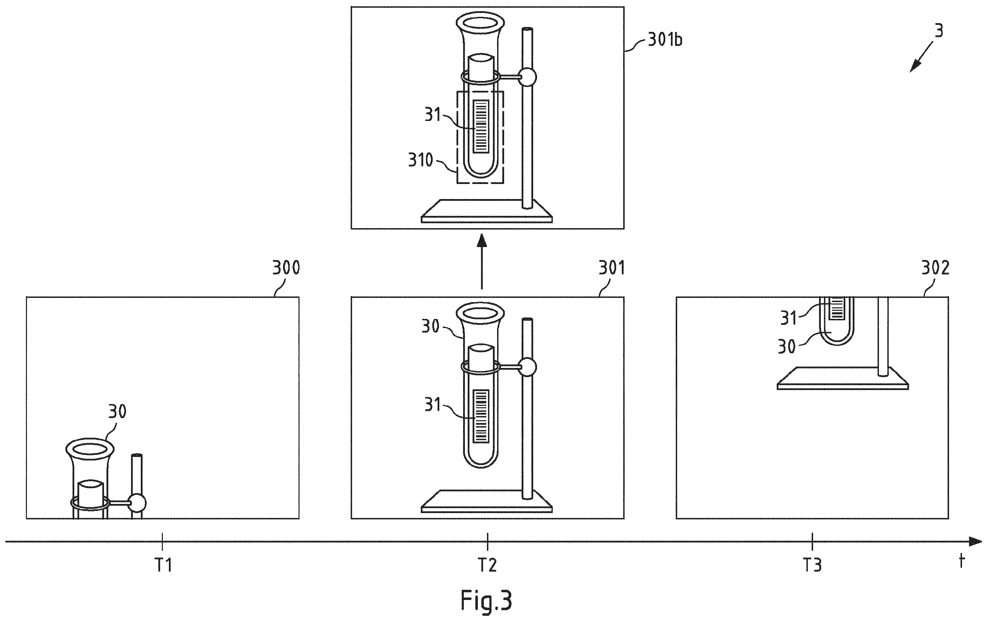

Step 230 comprises processing the one or more captured frames for extracting data represented by the optical pattern. Step 230 may be performed after or at least partly while step 220 is being performed. Accordingly, step 230 may correspond to real-time or near real-time processing of the captured one or more frames. Step 230 may terminate e.g. in response to a user input and/or in response to having extracted data from an optical pattern. Further example details that may be part of processing step 230 will now be described with reference to Fig. 3.

Fig. 3 shows a schematic diagram 3 illustrating processing steps of an example embodiment.

Fig. 3 shows three frames 300, 301, and 302 over a time (t) axis. Frame 300 may have been captured at time instant T1, frame 301 may have been captured at time instant T2 and frame 302 may have been or will be captured at time instant T3. The time interval between T1 and T2 may be, e.g. within the limits of the hardware capabilities of the device that captures the frames 300, 301, 302, equal to the time interval between T2 and T3. The time intervals may correspond to a predetermined default framerate, e.g. 24 fps.

An apparatus may have captured the frames 300, 301, and 302 while being moved by a user. Due to the movement, frames 300, 301, and 302 may each show a scene that is at least partly different from the other two scenes.

The one or more captured frames that are processed in the following may be understood to be e.g. only frame 301; frames 300 and 301; frames 300, 301, and 302; or any one or more frames of frames 300, 301, 302 and one or more further frames that are not shown.

By way of example, frames 300, 301, and 302 relate to optical pattern 31. Optical pattern 31 is, as an example, shown as a one-dimensional barcode. Further as an example, it is shown to be attached to a test tube 30. It may have a size that is less than or equal to a predetermined threshold, e.g. it may have an area less than 200 mm². It may further be printed in a print quality less than or equal to a predetermined threshold, e.g. less than 72 dpi.

The processing of one or more of the frames 300, 301, and 302 for extracting data related to the optical pattern 31 may involve selecting a frame 301b from the plurality of frames 300, 301, 302, the selected frame 301b comprising a representation of at least part of the optical pattern 31. The selecting may be done based on a detection of whether a frame 300, 301, 302 comprises a representation of at least part of the optical pattern 31. In various embodiments, the selecting may involve comparing which of the available frames, e.g. frames 300 and 301 or, depending on the time instant at which this step is performed, frames 300, 301 and 302, seems to comprise the e.g. largest, e.g. in terms of pixels, representation of at least part of the optical pattern 31. Thus, a localization of a potential optical pattern may be performed for one or more of the frames 300, 301, and 302, e.g. based on computed directional coherence and/or corner and/or edge detection.

Once a frame 301b has been selected, it may be further processed for extracting the data based on the representation of the at least part of the optical pattern 31. For instance, the frame 301b may be cropped. The area 310 remaining after cropping may have a predefined size, e.g. in terms of pixels or in terms of ratio of the original frame 301b. Alternatively, the size and/or shape of the area 310 may be dependent on the detected optical pattern 31. For example, the area 310 may be selected so that the optical pattern 31 fits the area 310.

The area 310 may then be further processed to extract the data from the representation of the at least part of the optical pattern 31. This may be beneficial in that it may save computational and memory resources to process area 310 instead of the, e.g. entire, frame 301b. Further processing steps may for example be: converting the area 310 to grayscale, binarizing the area 310 and/or decoding the optical pattern 31. The decoding may be done for instance according to a predefined structure of the optical pattern 31, e.g. the structure of an EAN13 barcode or a QR-code.

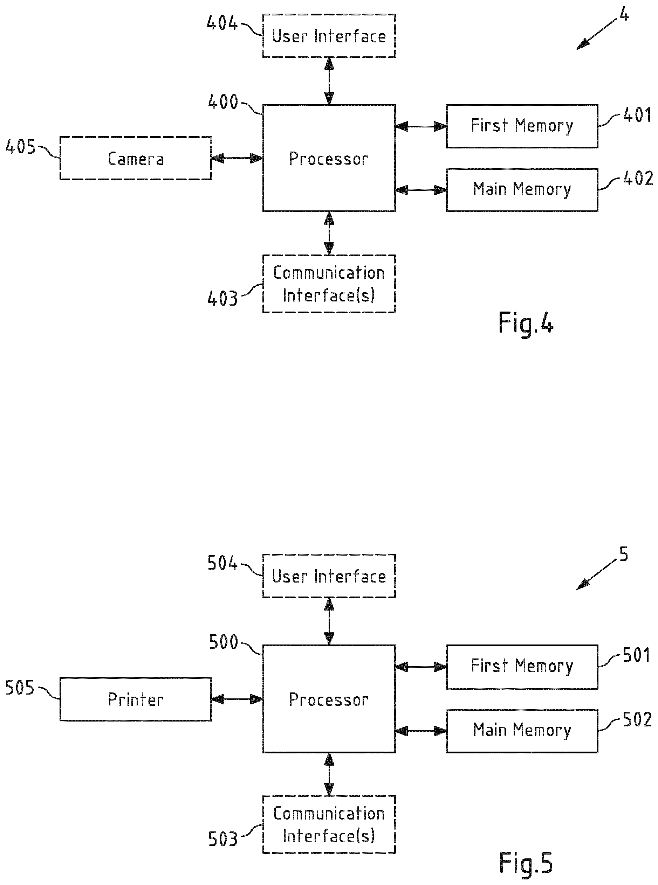

Fig. 4 shows a schematic block diagram of an apparatus 4 for performing one or more steps of a method according to an example embodiment.

The apparatus 4 may be adapted to perform the method according to the example aspect described above.

By way of example, the apparatus 4 can represent the apparatus 10 of the system 1. Thus, apparatus 4 may for instance be a smartphone. However, it may also be any other kind of scanner or reader. In various embodiments, apparatus 4 may be a server which instructs another apparatus with a camera to perform one or more actions.

By way of example, the processor 400 may execute a program causing the apparatus 4 to perform and/or control the method according to any of the embodiments described above. The program may be stored in the first memory 401. Furthermore, data may be stored in the first memory 401. The data may comprise e.g. predetermined default values for one or more parameters, e.g. a predetermined default framerate and/or a setting for a predetermined default video or image encoder. The first memory 401 may be non-volatile.

Additionally, apparatus 4 may comprise a main memory 402. The main memory 402 may be used particularly for storing temporary data during the executing of a program. For instance, apparatus 4 may store one or more captured frames during processing in the main memory 402. When a program running on the apparatus 4 detects an amount of memory useable for storing one or more frames during the processing, the memory referred to may be the main memory 402 (in addition to the first memory 401 or without the first memory 401).

Optionally, the apparatus 4 may comprise communication interface(s) 403. This may for instance be the case if the apparatus 4 is a smartphone. By way of example, the apparatus 4 can use these communication interface(s) 403 to transmit and receive information and data, for instance over the Internet and/or using wireless data transmission technologies. Furthermore, the communication interface(s) 403 may be used by the apparatus 4 to communicate e.g. with a server. The server may, for example, host a database with information related to lab object identifiers.

Further, the apparatus 4 may optionally comprise a user interface 404. This may be particularly the case if the apparatus 4 is e.g. a smartphone. The user interface 404 may allow the apparatus 4 to exchange information with a user. Thereby, a user may for example trigger the start of an application and/or process for scanning an optical pattern. Similarly, the user may for example be informed of the outcome of a scanning process. For example, the data extracted from an optical pattern may be communicated from the apparatus 4 to the user. An example of a user interface 404 is a touchscreen. Alternatively, a user interface 404 may comprise a screen and buttons and/or a keyboard and/or a mouse. Other types of user interface 404 are possible as well, e.g. output of audio signals and/or speech recognition and/or gesture recognition.

Additionally, the apparatus 4 may optionally comprise a camera 405. For example, if the apparatus 4 comprises a camera 405, it may be able to carry out the method of the embodiments described before by itself. In contrast, if the apparatus 4 does not comprise a camera 405, the apparatus 4 may control and/or trigger another apparatus with a camera and/or a camera to carry out one or more steps of the methods of the embodiments described above.

The camera 405 may be capable of capturing one or more frames according to different settings. For example, the camera 405 may be capable of capturing one or more frames at one or more different resolutions and/or at one or more different framerates and/or using one or more different image or video encoders.

Fig. 5 shows a schematic block diagram of another apparatus 5 for performing one or more steps of a method according to an example embodiment, the apparatus comprising a printer 505.

The apparatus 5 may for instance be adapted to print labels and/or tags comprising one or more optical patterns, e.g. one or more barcodes and/or one or more QR codes. Thus, the apparatus 5 may be adapted for printing an optical pattern representing data on a physical object. While printer 505 may be capable of printing labels or tags, it may alternatively or additionally be capable of printing onto other objects, e.g. having arbitrary shapes, e.g. cylindrical form.

The apparatus 5 may be adapted to print an optical pattern that is less than or equal to a predetermined threshold size, e.g. in terms of area and/or one of its dimensions using printer 505. Additionally or alternatively, the apparatus 5 may be adapted to print an optical pattern on a physical object in a print quality less than or equal to a predetermined threshold, e.g. measured in dots per inch (DPI), using printer 505.

By way of example, the processor 500 may execute a program causing the apparatus 5 to perform and/or control the printing described above. The program may involve converting data to be represented by an optical pattern to an optical pattern, e.g. based on predetermined settings. The program may be stored in the first memory 501. Furthermore, data may be stored in the first memory 501. The data may comprise e.g. preconfigured settings for printing, e.g. print quality and/or size of an optical pattern. The first memory 501 may be non-volatile.

Additionally, apparatus 5 may comprise a main memory 502. The main memory 502 may be used particularly for storing temporary data during the execution of a program. For instance, apparatus 5 may store data in the main memory 502 that is to be represented by an optical pattern, e.g. a number and/or identifier. Additionally or alternatively, apparatus 5 may store one or more optical patterns, e.g. geometric shapes.

Optionally, the apparatus 5 may comprise communication interface(s) 503. By way of example, the apparatus 5 can use these communication interface(s) 503 to transmit and receive information and data, for instance over the Internet and/or using wireless data transmission technologies. The information and/or data may relate to one or more optical patterns and/or data to be represented in one or more optical patterns. The information and/or data may additionally or alternatively relate to settings for printing one or more optical patterns.

Optionally, the apparatus 5 may comprise a user interface 504. The user interface 504 may allow the apparatus 5 to exchange information with a user. An example of a user interface 504 is a touchscreen. Alternatively, a user interface 504 may comprise a screen and buttons and/or a keyboard and/or a mouse. Other types of user interface 504 are possible as well, e.g. output of audio signals and/or speech recognition and/or gesture recognition. A user interface 504 may for instance be used by a user to trigger the printing of an optical pattern. The user interface 504 may additionally or alternatively be used to input data that is to be represented in a printed optical pattern.

Any of the methods, processes and actions described or illustrated herein may be implemented using executable instructions in a general-purpose or special-purpose processor and stored on a computer-readable storage medium (e.g., disk, memory, or the like) to be executed by such a processor. References to a 'computer-readable storage medium' should be understood to encompass specialized circuits such as FPGAs, ASICs, signal processing devices, and other devices.

The expression "A and/or B" is considered to comprise any one of the following three scenarios: (i) A, (ii) B, (iii) A and B. Furthermore, the article "a" is not to be understood as "one", i.e. use of the expression "an element" does not preclude that also further elements are present. The term "comprising" is to be understood in an open sense, i.e. in a way that an object that "comprises an element A" may also comprise further elements in addition to element A.

It will be understood that all presented embodiments are only exemplary, and that any feature presented for a particular example embodiment may be used with any aspect of the invention on its own or in combination with any feature presented for the same or another particular example embodiment and/or in combination with any other feature not mentioned. In particular, the example embodiments presented in this specification shall also be understood to be disclosed in all possible combinations with each other, as far as it is technically reasonable and the example embodiments are not alternatives with respect to each other. It will further be understood that any feature presented for an example embodiment in a particular category (method/apparatus/computer program) may also be used in a corresponding manner in an example embodiment of any other category. It should also be understood that presence of a feature in the presented example embodiments shall not necessarily mean that this feature forms an essential feature of the invention and cannot be omitted or substituted.

The sequence of all method steps presented above is not mandatory, also alternative sequences may be possible. Nevertheless, the specific sequence of method steps exemplarily shown in the figures shall be considered as one possible sequence of method steps for the respective embodiment described by the respective figure.

Example embodiments have been described above. It should be noted that there are alternative ways and variations which are obvious to a skilled person in the art and can be implemented without deviating from the scope of the appended claims.

## Claims

1. A method, performed by one or more apparatuses, the method comprising:
- detecting one or more resolutions useable for capturing one or more frames with a camera of an apparatus;
- setting a detected resolution for capturing one or more frames relating to an optical pattern using the camera of the apparatus, the set resolution being greater than one or more further resolutions useable for capturing one or more frames with the camera of the apparatus;
- capturing one or more frames relating to an optical pattern using the camera of the apparatus and using the set resolution; and
- processing the one or more captured frames for extracting data represented by the optical pattern;
detecting an amount of memory useable for storing one or more frames during the processing, and
setting the detected resolution for capturing the one or more frames relating to the optical pattern using the camera of the apparatus taking into account the detected amount of memory, the setting comprising:
• estimating how much memory will be used when capturing and processing the one or more frames using the camera of the apparatus using a first resolution;
• determining whether the amount of memory useable for storing the one or more frames during the processing is greater or less than the estimated amount of memory;
• depending on the outcome of the determining, setting the first resolution for capturing the one or more frames or to determine whether the outcome of the determining changes for another resolution.

2. The method of claim 1, wherein the optical pattern to which the one or more captured frames relate is or comprises a barcode and/or a quick response, QR, code.

3. The method of any of claims 1-2, wherein the optical pattern to which the one or more captured frames relate has a size that is less than or equal to a predetermined threshold size.

4. The method of any of claims 1-3, wherein the optical pattern to which the one or more captured frames relate is printed on a physical object in a print quality less than or equal to a predetermined threshold.

5. The method of any of claims 1-4, wherein the one or more captured frames are processed using a predetermined default video or image encoder.

6. The method of any of claims 1-5, wherein a plurality of framesare captured in the capturing of the one or more frames.

7. The method of claim 6, wherein the plurality of frames are captured using a predetermined default framerate.

8. The method of any of claims 6-7, wherein the processing of the one or more captured frames for extracting data related to the optical pattern comprises:
- selecting a frame from the plurality of frames, the selected frame comprising a representation of at least part of the optical pattern; and
- extracting the data based on the representation of the at least part of the optical pattern.

9. The method of any of claims 1-8, wherein the processing of the one or more captured frames comprises:
- cropping at least one frame of the one or more captured frames.

10. The method of claim 8, the method further comprising:
stopping the capturing of frames, once the frame, compromising the representation of at least part of the optical pattern, is selected.

11. The method of any of claims 1-10, the method further comprising:
- printing the optical pattern on a physical object such that one or more frames relating to the optical pattern are capturable.

12. An apparatus comprising at least one processor and at least one memory including computer program code, the at least one memory and the computer program code configured to, with the at least one processor, cause the apparatus at least to perform the method of any of the preceding claims.

13. A system comprising a first apparatus, the first apparatus configured as an apparatus as claimed in claim 12, the computer program code configured to, with the at least one processor, cause the first apparatus at least to perform the following:
- printing an optical pattern representing data on a physical object; the system further comprising a second apparatus, the second apparatus configured as an apparatus as claimed in claim 12, the computer program code configured to, with the at least one processor, cause the second apparatus at least to perform the following:
- detecting one or more resolutions useable for capturing one or more frames with a camera of the second apparatus;
- setting a detected resolution for capturing one or more frames relating to an optical pattern using the camera of the second apparatus, the set resolution being greater than one or more further resolutions useable for capturing one or more frames with the camera of the second apparatus;
- capturing one or more frames relating to the printed optical pattern using the camera of the second apparatus and using the set resolution; and
- processing the one or more captured frames for extracting the data represented by the printed optical pattern.

14. A system comprising a plurality of objects, each of the plurality of objects comprising a respective optical pattern representing respective data;
the system further comprising an apparatus of claim 12, the computer program code configured to, with the at least one processor, cause the apparatus at least to perform the following:
- detecting one or more resolutions useable for capturing one or more frames with a camera of the apparatus;
- setting a detected resolution for capturing one or more frames relating to an optical pattern using the camera of the apparatus, the set resolution being greater than one or more further resolutions useable for capturing one or more frames with the camera of the apparatus;
- capturing one or more frames relating to an optical pattern comprised by an object of the plurality of objects using the camera of the apparatus and using the set resolution; and
- processing the one or more captured frames for extracting the data represented by the optical pattern.

15. A non-transitory computer readable medium comprising program instructions stored thereon for performing or controlling at least the method of any of the claims 1 to 11.

## Patentansprüche

1. Verfahren, das von einer oder mehreren Einrichtungen durchgeführt wird, wobei das Verfahren umfasst:
- Detektieren einer oder mehrerer Auflösungen, die zum Erfassen eines oder mehrerer Einzelbilder mit einer Kamera einer Einrichtung verwendbar sind;
- Einstellen einer detektierten Auflösung zum Erfassen eines oder mehrerer Einzelbilder bezüglich eines optischen Musters unter Verwendung der Kamera der Einrichtung, wobei die eingestellte Auflösung größer ist als eine oder mehrere weitere Auflösungen, die zum Erfassen eines oder mehrerer Einzelbilder mit der Kamera der Einrichtung verwendbar sind;
- Erfassen eines oder mehrerer Einzelbilder bezüglich eines optischen Musters unter Verwendung der Kamera der Einrichtung und unter Verwendung der eingestellten Auflösung; und
- Verarbeiten des einen oder der mehreren erfassten Einzelbilder zum Extrahieren von Daten, die durch das optische Muster dargestellt werden;
Erfassen einer Menge an Speicher, der zum Speichern eines oder mehrerer Einzelbilder während der Verarbeitung verwendbar ist, und
Einstellen der detektierten Auflösung zum Erfassen des einen oder der mehreren Einzelbilder bezüglich des optischen Musters unter Verwendung der Kamera der Einrichtung unter Berücksichtigung der detektierten Menge an Speicher, wobei das Einstellen umfasst:
• Schätzen, wie viel Speicher verwendet wird, wenn das eine oder die mehreren Einzelbilder unter Verwendung der Kamera der Einrichtung mit einer ersten Auflösung erfasst und verarbeitet werden;
• Bestimmen, ob die Menge an Speicher, die zum Speichern des einen oder der mehreren Einzelbilder während der Verarbeitung verwendbar ist, größer oder kleiner als die geschätzte Menge an Speicher ist;
• in Abhängigkeit von dem Ergebnis der Bestimmung, Einstellen der ersten Auflösung zum Erfassen des einen oder der mehreren Einzelbilder oder zum Bestimmen, ob sich das Ergebnis der Bestimmung für eine andere Auflösung ändert.

2. Verfahren nach Anspruch 1, wobei das optische Muster, auf das sich das eine oder die mehreren erfassten Einzelbilder beziehen, ein Strichcode und/oder ein Quick-Response-Code, QR-Code, ist oder diesen umfasst.

3. Verfahren nach einem der Ansprüche 1 bis 2, wobei das optische Muster, auf das sich das eine oder die mehreren erfassten Einzelbilder beziehen, eine Größe aufweist, die kleiner oder gleich einer vorbestimmten Schwellenwertgröße ist.

4. Verfahren nach einem der Ansprüche 1 bis 3, wobei das optische Muster, auf das sich das eine oder die mehreren erfassten Einzelbilder beziehen, auf ein physisches Objekt in einer Druckqualität gedruckt ist, die kleiner oder gleich einem vorbestimmten Schwellenwert ist.

5. Verfahren nach einem der Ansprüche 1 bis 4, wobei das eine oder die mehreren erfassten Einzelbilder unter Verwendung eines vorbestimmten Standard-Video- oder -Bildcodierers verarbeitet werden.

6. Verfahren nach einem der Ansprüche 1 bis 5, wobei eine Vielzahl von Einzelbildern bei der Erfassung des einen oder der mehreren Einzelbilder erfasst wird.

7. Verfahren nach Anspruch 6, wobei die Vielzahl von Einzelbildern unter Verwendung einer vorbestimmten Standard-Einzelbildrate erfasst wird.

8. Verfahren nach einem der Ansprüche 6 bis 7, wobei die Verarbeitung des einen oder der mehreren erfassten Einzelbilder zur Extraktion von Daten bezüglich des optischen Musters umfasst:
- Auswählen eines Einzelbildes aus der Vielzahl von Einzelbildern, wobei das ausgewählte Einzelbild eine Repräsentation von mindestens einem Teil des optischen Musters umfasst; und
- Extrahieren der Daten basierend auf der Repräsentation des mindestens einen Teils des optischen Musters.

9. Verfahren nach einem der Ansprüche 1 bis 8, wobei die Verarbeitung des einen oder der mehreren erfassten Einzelbilder umfasst:
- Zuschneiden mindestens eines Einzelbildes des einen oder der mehreren erfassten Einzelbilder.

10. Verfahren nach Anspruch 8, wobei das Verfahren ferner umfasst: Stoppen der Erfassung von Einzelbildern, sobald das Einzelbild, das die Repräsentation von mindestens einem Teil des optischen Musters umfasst, ausgewählt ist.

11. Verfahren nach einem der Ansprüche 1 bis 10, wobei das Verfahren ferner umfasst:
- Drucken des optischen Musters auf ein physisches Objekt derart, dass ein oder mehrere Einzelbilder bezüglich des optischen Musters erfassbar sind.

12. Einrichtung, die mindestens einen Prozessor und mindestens einen Speicher, einschließlich Computerprogrammcode, umfasst, wobei der mindestens eine Speicher und der Computerprogrammcode konfiguriert sind, um mit dem mindestens einen Prozessor die Einrichtung zu veranlassen, mindestens das Verfahren nach einem der vorstehenden Ansprüche durchzuführen.

13. System, das eine erste Einrichtung umfasst, wobei die erste Einrichtung als eine Einrichtung nach Anspruch 12 konfiguriert ist, wobei der Computerprogrammcode konfiguriert ist, um mit dem mindestens einen Prozessor die erste Einrichtung zu veranlassen, mindestens Folgendes durchzuführen:
- Drucken eines optischen Musters, das Daten repräsentiert, auf ein physisches Objekt;
wobei das System ferner eine zweite Einrichtung umfasst, wobei die zweite Einrichtung als eine Einrichtung nach Anspruch 12 konfiguriert ist, wobei der Computerprogrammcode konfiguriert ist, um mit dem mindestens einen Prozessor die zweite Einrichtung zu veranlassen, mindestens Folgendes durchzuführen:
- Detektieren einer oder mehrerer Auflösungen, die zum Erfassen eines oder mehrerer Einzelbilder mit einer Kamera der zweiten Einrichtung verwendbar sind;
- Einstellen einer detektierten Auflösung zum Erfassen eines oder mehrerer Einzelbilder bezüglich eines optischen Musters unter Verwendung der Kamera der zweiten Einrichtung, wobei die eingestellte Auflösung größer ist als eine oder mehrere weitere Auflösungen, die zum Erfassen eines oder mehrerer Einzelbilder mit der Kamera der zweiten Einrichtung verwendbar sind;
- Erfassen eines oder mehrerer Einzelbilder bezüglich des gedruckten optischen Musters unter Verwendung der Kamera der zweiten Einrichtung und unter Verwendung der eingestellten Auflösung; und
- Verarbeiten des einen oder der mehreren erfassten Einzelbilder zur Extraktion der durch das gedruckte optische Muster repräsentierten Daten.

14. System, das eine Vielzahl von Objekten umfasst, wobei jedes der Vielzahl von Objekten ein jeweiliges optisches Muster umfasst, das jeweilige Daten repräsentiert;
wobei das System ferner eine Einrichtung nach Anspruch 12 umfasst, wobei der Computerprogrammcode konfiguriert ist, um mit dem mindestens einen Prozessor die Einrichtung zu veranlassen, mindestens Folgendes durchzuführen:
- Detektieren einer oder mehrerer Auflösungen, die zum Erfassen eines oder mehrerer Einzelbilder mit einer Kamera der Einrichtung verwendbar sind;
- Einstellen einer detektierten Auflösung zum Erfassen eines oder mehrerer Einzelbilder bezüglich eines optischen Musters unter Verwendung der Kamera der Einrichtung, wobei die eingestellte Auflösung größer ist als eine oder mehrere weitere Auflösungen, die zum Erfassen eines oder mehrerer Einzelbilder mit der Kamera der Einrichtung verwendbar sind;
- Erfassen eines oder mehrerer Einzelbilder, die sich auf ein optisches Muster beziehen, das von einem Objekt der Vielzahl von Objekten umfasst wird, unter Verwendung der Kamera der Einrichtung und unter Verwendung der eingestellten Auflösung; und
- Verarbeiten des einen oder der mehreren erfassten Einzelbilder zur Extraktion der durch das optische Muster repräsentierten Daten.

15. Nicht-transitorisches computerlesbares Medium, das darauf gespeicherte Programmanweisungen umfasst, um mindestens das Verfahren nach einem der Ansprüche 1 bis 11 durchzuführen oder zu steuern.

## Revendications

1. Procédé, effectué par un ou plusieurs appareils, le procédé comprenant :
- la détection d'une ou plusieurs résolutions utilisables pour capturer une ou plusieurs trames avec une caméra d'un appareil ;
- le réglage d'une résolution détectée pour capturer une ou plusieurs trames relatives à un motif optique à l'aide de la caméra de l'appareil, la résolution réglée étant supérieure à une ou plusieurs autres résolutions utilisables pour capturer une ou plusieurs trames avec la caméra de l'appareil ;
- la capture d'une ou plusieurs trames relatives à un motif optique à l'aide de la caméra de l'appareil et à l'aide de la résolution réglée ; et
- le traitement de la ou des trames capturées pour extraire des données représentées par le motif optique ;
la détection d'une quantité de mémoire utilisable pour stocker une ou plusieurs trames pendant le traitement, et
le réglage de la résolution détectée pour capturer la ou les trames relatives au motif optique à l'aide de la caméra de l'appareil en tenant compte de la quantité de mémoire détectée, le réglage comprenant :
- l'estimation de la quantité de mémoire qui sera utilisée lors de la capture et du traitement de la ou des trames à l'aide de la caméra de l'appareil à l'aide d'une première résolution ;
- le fait de déterminer si la quantité de mémoire utilisable pour stocker la ou les trames pendant le traitement est supérieure ou inférieure à la quantité de mémoire estimée ;
- en fonction du résultat de la détermination, le réglage de la première résolution pour capturer la ou les images ou pour déterminer si le résultat de la détermination change pour une autre résolution.

2. Procédé selon la revendication 1, dans lequel le motif optique auquel se rapportent la ou les trames capturées est ou comprend un code-barres et/ou un code à réponse rapide, QR.

3. Procédé selon l'une quelconque des revendications 1 à 2, dans lequel le motif optique auquel se rapportent la ou les trames capturées a une taille qui est inférieure ou égale à une taille seuil prédéterminée.

4. Procédé selon l'une quelconque des revendications 1 à 3, dans lequel le motif optique auquel se rapportent la ou les trames capturées est imprimé sur un objet physique dans une qualité d'impression inférieure ou égale à un seuil prédéterminé.

5. Procédé selon l'une quelconque des revendications 1 à 4, dans lequel la ou les trames capturées sont traitées à l'aide d'un codeur vidéo ou d'image par défaut prédéterminé.

6. Procédé selon l'une quelconque des revendications 1 à 5, dans lequel une pluralité de trames sont capturées lors de la capture de la ou des trames.

7. Procédé selon la revendication 6, dans lequel la pluralité de trames est capturée à l'aide d'une cadence de trames par défaut prédéterminée.

8. Procédé selon l'une quelconque des revendications 6 à 7, dans lequel le traitement de la ou des trames capturées pour extraire des données liées au motif optique comprend :
- la sélection d'une trame parmi la pluralité de trames, la trame sélectionnée comprenant une représentation d'au moins une partie du motif optique ; et
- l'extraction des données sur la base de la représentation de l'au moins une partie du motif optique.

9. Procédé selon l'une quelconque des revendications 1 à 8, dans lequel le traitement de la ou des trames capturées comprend :
- le recadrage d'au moins une trame de la ou des images capturées.

10. Procédé selon la revendication 8, le procédé comprenant en outre :
l'arrêt de la capture de trames, une fois que la trame, compromettant la représentation d'au moins une partie du motif optique, est sélectionnée.

11. Procédé selon l'une quelconque des revendications 1 à 10, le procédé comprenant en outre :
- l'impression du motif optique sur un objet physique de sorte qu'une ou plusieurs trames relatives au motif optique sont capturables.

12. Appareil comprenant au moins un processeur et au moins une mémoire comportant un code de programme informatique, l'au moins une mémoire et le code de programme informatique étant configurés pour, avec l'au moins un processeur, amener l'appareil à au moins effectuer le procédé selon l'une quelconque des revendications précédentes.

13. Système comprenant un premier appareil, le premier appareil étant configuré en tant qu'appareil selon la revendication 12, le code de programme informatique étant configuré pour, avec l'au moins un processeur, amener le premier appareil à au moins effectuer ce qui suit :
- l'impression d'un motif optique représentant des données sur un objet physique ;
le système comprenant en outre un second appareil, le second appareil étant configuré en tant qu'appareil selon la revendication 12, le code de programme informatique étant configuré pour, avec l'au moins un processeur, amener le second appareil à au moins effectuer ce qui suit :
- la détection d'une ou plusieurs résolutions utilisables pour capturer une ou plusieurs trames avec une caméra du second appareil ;
- le réglage d'une résolution détectée pour capturer une ou plusieurs trames relatives à un motif optique à l'aide de la caméra du second appareil, la résolution réglée étant supérieure à une ou plusieurs autres résolutions utilisables pour capturer une ou plusieurs trames avec la caméra du second appareil ;
- la capture d'une ou plusieurs trames relatives au motif optique imprimé à l'aide de la caméra du second appareil et à l'aide de la résolution réglée ; et
- le traitement de la ou des trames capturées pour extraire les données représentées par le motif optique imprimé.

14. Système comprenant une pluralité d'objets, chacun de la pluralité d'objets comprenant un motif optique respectif représentant des données respectives ;
le système comprenant en outre un appareil selon la revendication 12, le code de programme informatique étant configuré pour, avec l'au moins un processeur, amener l'appareil à au moins effectuer ce qui suit :
- la détection d'une ou plusieurs résolutions utilisables pour capturer une ou plusieurs trames avec une caméra de l'appareil ;
- le réglage d'une résolution détectée pour capturer une ou plusieurs trames relatives à un motif optique à l'aide de la caméra de l'appareil, la résolution réglée étant supérieure à une ou plusieurs autres résolutions utilisables pour capturer une ou plusieurs trames avec la caméra de l'appareil ;
- la capture d'une ou plusieurs trames relatives à un motif optique compris par un objet de la pluralité d'objets à l'aide de la caméra de l'appareil et à l'aide de la résolution réglée ; et
- le traitement de la ou des trames capturées pour extraire les données représentées par le motif optique.

15. Support non transitoire lisible par ordinateur comprenant des instructions de programme stockées sur celui-ci pour effectuer ou commander au moins le procédé selon l'une quelconque des revendications 1 à 11.
